Europäisches Patentamt

European Patent Office

Office européen des brevets

(19)

(11) Numéro de publication : **0 028 576**
**B2**

(12)    # NOUVEAU FASCICULE DE BREVET EUROPÉEN

(45) Date de publication du nouveau fascicule du brevet : **10.09.86**

(51) Int. Cl.⁴ : **F 16 J 15/12**

(21) Numéro de dépôt : **80420106.9**

(22) Date de dépôt : **22.09.80**

(54) **Joint de culasse pour moteur à combustion interne.**

(30) Priorité : **31.10.79 FR 7927394**

(43) Date de publication de la demande :
**13.05.81 Bulletin 81/19**

(45) Mention de la délivrance du brevet :
**13.04.83 Bulletin 83/15**

(45) Mention de la décision concernant l'opposition :
**10.09.86 Bulletin 86/37**

(84) Etats contractants désignés :
**BE DE GB IT NL SE**

(56) Documents cités :
**DE-A- 2 028 498**
**FR-A- 2 188 762**
**FR-A- 2 244 942**
**US-A- 1 793 424**
**US-A- 1 864 854**
**US-A- 2 001 225**

(73) Titulaire : **CURTY**
**25, rue Aristide Briand**
**Saint-Priest, Rhône (FR)**

(72) Inventeur : **Eyrard, Pierre**
**135, rue Pierre Valdo**
**Lyon 5ème, Rhône (FR)**
Inventeur : **Poquet, Jean-Paul**
**33, rue Pasteur**
**F-69300 Caluire (Rhône) (FR)**

(74) Mandataire : **Maureau, Philippe**
**Cabinet Germain & Maureau Le Britannia - Tour C 20,**
**bld Eugène Déruelle**
**F-69003 Lyon (FR)**

EP 0 028 576 B2

## Description

La présente invention concerne un procédé de fabrication d'un joint de culasse pour moteur à combustion interne.

Les joints de culasse sont destinés à être placés entre un bloc moteur et une culasse en vue d'assurer l'étanchéité à divers fluides. C'est ainsi que le joint de culasse doit assurer l'étanchéité autour des orifices qui laissent passer des fluides tels que l'eau de refroidissement et l'huile qui circulent entre le bloc moteur et la culasse, et doit également assurer l'étanchéité aux gaz au niveau de la chambre de combustion de chacun des cylindres, nécessitant une résistance à des pressions et à des températures très élevées.

Cette fonction est remplie par des « anneaux de feu » obtenus par découpe, emboutissage et sertissage d'une tôle métallique sur le bord des orifices pratiqués dans le joint qui est pour sa part réalisé en un matériau élastique tel qu'un carton d'amiante armé ou non.

On sait que cette étanchéité aux gaz dépend du serrage exercé sur les anneaux de feu du joint et que le serrage dans l'axe du moteur est en général plus faible que le serrage dans l'axe-travers en raison de la déformation de la culasse et des procédés d'usinage du bloc et de la culasse.

On a déjà proposé d'améliorer cette étanchéité en bordant les ouvertures correspondantes des montures métalliques de garnitures annulaires. L'étanchéité obtenue, quoiqu'améliorée, ne donne toutefois pas entière satisfaction, pour les raisons ci-dessus, en raison des épaisseurs uniformes des garnitures sur le pourtour de l'anneau de feu.

Le brevet US-1 793 424 décrit un joint de culasse comprenant une âme recouverte, sur toute sa surface et sur ses deux faces, par deux plaques métalliques, une plaque métallique inférieure et une plaque métallique supérieure. Au niveau de chaque ouverture correspondant à une chambre de combustion, la plaque subit des opérations d'emboutissage et de sertissage assurant la formation d'ailes formant les anneaux de feu.

Dans la zone située entre deux cylindres, est disposé un insert métallique se présentant par exemple sous la forme d'une feuille de cuivre, comportant des ailes retournées sous les anneaux de feu.

Il est procédé au positionnement des inserts par rapport à l'âme puis à l'emboutissage des inserts pour former les ailes au niveau des ouvertures. La plaque de recouvrement supérieure étant alors positionnée, il est procédé à un sertissage des inserts pour former les ailes venant prendre appui sur la plaque. Il est alors procédé à la mise en place de la plaque de recouvrement inférieure qui subit à son tour des opérations d'emboutissage et de sertissage.

Ce procédé présente les inconvénients suivants :

— multiplicité des opérations qui doivent être effectuées manuellement et notamment positionnement des inserts entre deux cylindres adjacents ;

— le positionnement de chaque insert est effectué de façon approximative, ce qui risque de se traduire par des défauts d'étanchéité ;

— mise en œuvre d'un joint comportant une âme et deux plaques de recouvrement, solution qui n'est presque plus utilisée en pratique de nos jours ;

— compte tenu de la structure des renforts, ceux-ci ne peuvent être placés que dans la zone comprise entre deux cylindres, mais non au niveau des zones des anneaux de feu situées aux extrémités du joint ; or, de nombreux moteurs modernes exigent un renfort aux extrémités ;

— nécessité de recouvrement d'une des faces du joint sur toute la zone comprise entre deux ouvertures de celui-ci ; si cette zone est de largeur importante, le serrage exercé à son niveau sera effectué au détriment du serrage au niveau des anneaux de feu.

La présente invention vise à remédier à ces inconvénients.

A cet effet, le procédé de fabrication d'un joint de culasse qu'elle concerne, comportant une plaque d'étanchéité en matériau élastique tel qu'un carton d'amiante armé ou non et des anneaux de feu obtenus par découpe, emboutissage et sertissage d'une tôle métallique sur le bord des orifices pratiqués dans la plaque d'étanchéité, des renforts étant prévus entre les anneaux et la plaque, localisés dans la zone de moindre serrage des anneaux de feu et réalisés en un matériau résistant aux températures et pressions exercées dans cette zone du moteur, dans lequel les renforts sont disposés sous chacune des deux faces des anneaux de feu et sont obtenus à partir d'une pièce de matière différente de celle à partir de laquelle sont réalisés les anneaux de feu, et constituée par un feuillard métallique mince en cuivre, laiton, acier ou aluminium appliqué sur la face de la tôle métallique correspondant à l'intérieur du serti formant chaque anneau de feu, est caractérisé en ce qu'il consiste à solidariser le feuillard formant les renforts et la tôle formant les anneaux de feu, à emboutir et sertir autour des orifices de la plaque d'étanchéité, en même temps le feuillard et la tôle.

Ce procédé présente les avantages suivants :

— simplicité de mise en œuvre puisqu'après solidarisation de la tôle dans laquelle sont ultérieurement formés les anneaux de feu et le feuillard de renfort, toutes les opérations sont effectuées comme si la tôle était mise en œuvre toute seule ;

— il en résulte une réduction du nombre d'opérations et un parfait positionnement des renforts par rapport aux anneaux de feu ;

— si besoin est, les renforts peuvent également être localisés du côté des extrémités du joint ;

— ces renforts peuvent être appliqués à des joints dont l'âme est revêtue ou non de deux plaques métalliques sur ses deux faces ;

— suivant l'application envisagée, le complexe tôle + feuillard de renforcement peut être monté de façon unitaire sur une garniture d'étanchéité, ou bien les différents anneaux de feu et leurs renforts peuvent être désolidarisés les uns des autres ; dans ce dernier cas, les renforts ne s'étendent pas dans la zone comprise entre deux anneaux de feu adjacents, de telle sorte que le serrage peut être concentré sur ces derniers, ce qui parfait l'étanchéité.

Selon un mode de mise en œuvre, ce procédé consiste à solidariser par collage le feuillard formant les renforts et la tôle formant les anneaux de feu.

Avantageusement le feuillard métallique possède une épaisseur comprise entre 0,02 et 0,15 mm.

La présente invention sera mieux comprise d'ailleurs et ses avantages ressortiront bien de la description qui suit en référence au dessin schématique annexé représentant, à titre d'exemple non limitatif, une forme d'exécution d'un joint de culasse à renforts localisés :

Figure 1 est une vue de dessous d'un joint de culasse à anneaux multiples ;

Figure 2 est une vue en perspective de la tôle métallique permettant la réalisation des anneaux de feu ;

Figure 3 est une vue en coupe et à échelle agrandie d'un détail de ce joint selon la ligne 3-3 de figure 1.

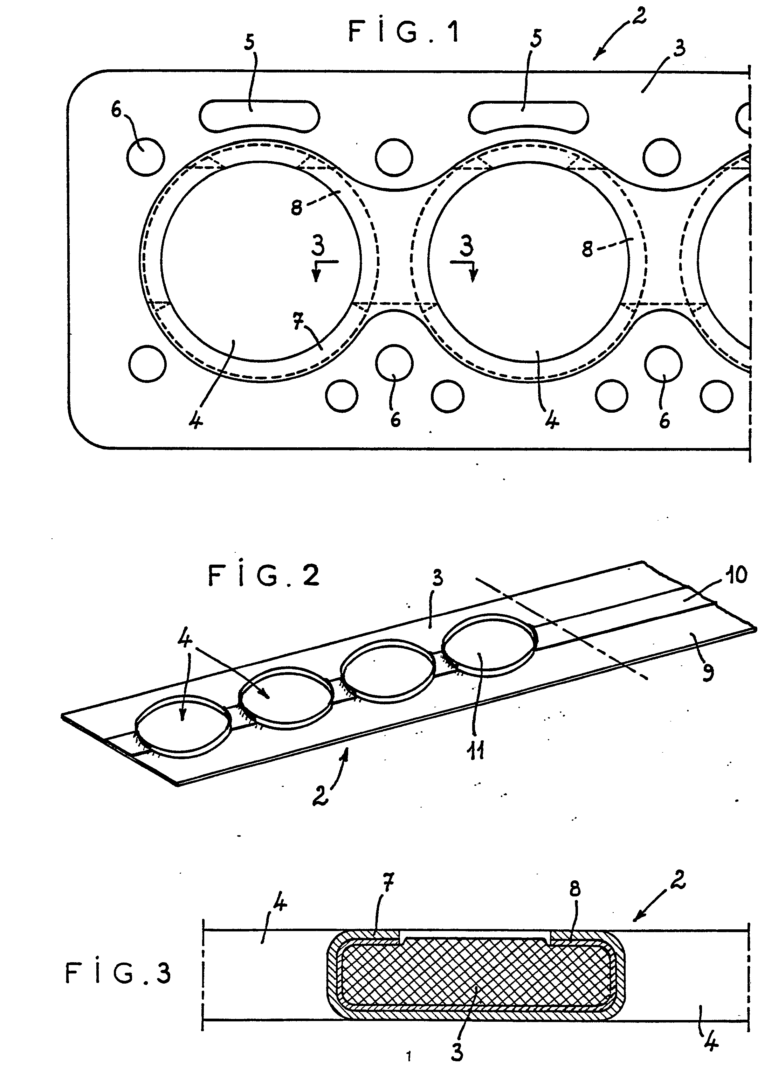

Le joint de culasse 2 représenté aux figures 1 et 2 est constitué par une plaque d'étanchéité 3 en matériau élastique et compressible tel qu'un carton d'amiante éventuellement renforcé. Il comporte des orifices 4, généralement circulaires, correspondant aux chambres de combustion, des orifices 5 destinés au passage de l'eau de refroidissement du moteur et de l'huile, ainsi que des orifices 6 destinés au passage des goujons de maintien de serrage de la culasse.

Les orifices 4 sont, comme il est connu en soi, entourés de garnitures 7 en tôle métallique, qui constituent les anneaux de feu ; ils comportent, en outre, selon la caractéristique essentielle de l'invention, des renforts 8 localisés sur l'axe de moindre serrage et disposés de part et d'autre des orifices 4. Ces renforts 8 sont placés, comme il ressort notamment de la figure 3, entre les anneaux de feu 7 et la plaque 3, sous chacune des deux faces des anneaux.

La figure 2 montre la tôle métallique 9 à partir de laquelle sont réalisés les anneaux de feu. Cette tôle, qui peut être une tôle de cuivre, d'aluminium, d'acier inoxydable, d'acier plaqué d'aluminium, d'acier zingué, d'acier étamé ou d'autres aciers revêtus comporte en sa partie centrale et s'étendant sur toute sa longueur une zone de renfort 10, correspondant à la zone de moindre serrage du joint de culasse 2.

Cette zone 10, rendue éventuellement solidaire de la tôle 9 par tout moyen connu en soi, est constituée par un feuillard de cuivre d'une épaisseur de l'ordre de 0,05 mm. Il pourrait s'agir également d'un feuillard mince en laiton, acier ou aluminium.

La partie gauche de la figure 2 montre le complexe tôle 9 et renfort 10 après emboutissage assurant la formation d'orifices généralement circulaires 11 de diamètre inférieur au diamètre des orifices 4 ménagés dans la plaque d'étanchéité 3.

Comme on le voit sur la figure 2, ces orifices 11 sont séparés par des zones de renfort 10 disposées de part et d'autre des dits orifices.

Le complexe est détouré de manière à ménager des pontages entre les anneaux de feu, puis appliqué sur la plaque d'étanchéité 3 et serti. Le renfort 10 se trouve alors à l'intérieur du culot serti de part et d'autre de la plaque d'étanchéité, recouvrant l'extrémité de ses faces supérieure et inférieure.

## Revendications

1. Procédé de fabrication d'un joint de culasse à anneaux unitaires ou à anneaux multiples, comportant une plaque d'étanchéité (3) en matériau élastique tel qu'un carton d'amiante armé ou non et des anneaux de feu (7) obtenus par découpe, emboutissage et sertissage d'une tôle métallique sur le bord des orifices (4) pratiqués dans la plaque d'étanchéité, des renforts étant prévus entre les anneaux et la plaque, localisés dans la zone de moindre serrage des anneaux de feu et réalisés en un matériau résistant aux températures et pressions exercées dans cette zone du moteur, dans lequel les renforts (8) sont disposés sous chacune des deux faces des anneaux de feu (7) et sont obtenus à partir d'une pièce (10) de matière différente de celle (9) à partir de laquelle sont réalisés les anneaux de feu, et constituée par un feuillard métallique (10) mince en cuivre, laiton, acier ou aluminium appliqué sur la face de la tôle métallique (9) correspondant à l'intérieur du serti formant chaque anneau de feu (7), caractérisé en ce qu'il consiste à solidariser le feuillard (10) formant les renforts et la tôle (9) formant les anneaux de feu, et à emboutir et sertir autour des orifices (4) de la plaque d'étanchéité (3), en même temps le feuillard (10) et la tôle (9).

2. Procédé selon la revendication 1, caractérisé en ce qu'il consiste à solidariser par collage le feuillard (10) formant les renforts et la tôle (9) formant les anneaux de feu (7).

3. Procédé selon l'une quelconque des revendications 1 et 2, caractérisé en ce qu'il consiste à fixer sur la tôle (9) formant les anneaux de feu un feuillard métallique (10) d'une épaisseur comprise entre 0,02 et 0,15 mm.

## Claims

1. A method of producing a cylinder-head gasket with unit rings or multiple rings, including a sealing plate (3) of resilient material such as asbestos-board, which may or may not be reinforced, and fire rings (7) obtained by cutting out, pressing and crimping of a metal sheet on the edges of openings (4) formed in the sealing plate, reinforcements being provided between the rings and the plate, located in the area of least clamping of the fire rings and made of a material which is resistant to the temperatures and pressures exerted in this area of the engine, in which method the reinforcements (8) are disposed under each of the two faces of the fire rings (7) and are made from one-piece (10) of a material which is different from that (9) from which the fire rings are made and which piece is constituted by a thin metallic ribbon (10) of copper, brass, steel or aluminium applied on the surface of the metal sheet (9) corresponding to the interior of the crimp forming each fire ring (7), characterised in that it consists in making rigid the ribbon (10) forming the reinforcements and the sheet (9) forming the fire rings, and in pressing and crimping around the openings (4) in the sealing plate (3), at the same time as the metallic ribbon (10) and the sheet (9).

2. A method according to Claim 1, characterised in that it consists in making rigid by adhesion the ribbon (10) forming the reinforcements and the sheet (9) forming the fire rings (7).

3. A method according to either of Claims 1 and 2, characterised in that it consists in fixing on the sheet (9) forming the fire rings a metallic ribbon (10) of a thickness comprised between 0.02 and 0.15 mm.

**Patentansprüche**

1. Verfahren zur Herstellung einer Zylinderkopfdichtung mit Einzel- oder Mehrfachringen, beinhaltend eine Dichtungsplatte (3) aus elastischem Material wie beispielsweise armiertem oder nichtarmiertem Asbestkarton, und aus Feuerringen (7), die durch Ausstanzen, Tiefziehen und Umfalzen eines metallischen Bleches am Rand von in die Dichtungsplatte eingebrachten Öffnungen (4) gebildet werden, wobei zwischen den Ringen und der Platte, lokalisiert in der Zone geringerer Druckbelastung der Feuerringe, Verstärkungen vorgesehen werden, die aus einem Material hergestellt werden, das den in dieser Zone des Motors auftretenden Temperaturen und Drücken widersteht, in welcher Zone die Verstärkungen (8) sich unter jeder der beiden Flächen der Feuerringe (7) befinden und die Verstärkungen ausgehend von einem Stück (10) eines Materiales hergestellt werden, das unterschiedlich zu dem Material (9) ist, aus dem die Feuerringe hergestellt werden und sie aus einem dünnen Metallband (10) aus Kupfer, Messing, Stahl oder Aluminium gebildet sind, das auf die Fläche des metallischen Bleches (9) aufgebracht ist, die dem Inneren der Umfalzung, die jeden Feuerring (7) bildet, entspricht, dadurch gekennzeichnet, daß das die Verstärkungen bildende Band (10) und das die Feuerringe bildende Blech (9) fest miteinander verbunden werden und daß das Metallband (10) und das Blech (9) um die Öffnungen (4) der Dichtungsplatte gleichzeitig gezogen und eingefalzt werden.

2. Verfahren nach Anspruch 1, dadurch gekennzeichnet, daß das die Verstärkungen bildende Metallband (10) und das die Feuerringe (7) bildende Blech (9) durch Verkleben fest miteinander verbunden werden.

3. Verfahren nach einem der Ansprüche 1 und 2, dadurch gekenneichnet, daß auf dem die Feuerringe bildenden Blech (9) ein metallisches Band (10) einer Dicke zwischen 0, 02 und 0, 15 mm befestigt wird.

FİG.1

FİG.2

FİG.3